# FASCICULE DE BREVET EUROPEEN

(11) **EP 4 092 295 B1**
(45) Date de publication et mention de la délivrance du brevet: **06.11.2024**
(21) Numéro de dépôt: 22173529.3
(22) Date de dépôt: 16.05.2022
(51) Int. Cl.: F16H 63/04, F16H 3/091, F16H 3/00, F16H 3/12, F16H 3/24, F16H 61/04

(54) **DISPOSITIF DE BOÎTE DE VITESSE POUR MACHINE AGRICOLE ET PROCÉDÉ S'Y RAPPORTANT**
GETRIEBEVORRICHTUNG FÜR LANDWIRTSCHAFTLICHE MASCHINE UND DAMIT VERBUNDENES VERFAHREN
GEARBOX DEVICE FOR AGRICULTURAL MACHINE AND RELATED METHOD

(30) Priorité: 18.05.2021 FR 2105177
(43) Date de publication de la demande: 23.11.2022
(73) Titulaire: Kuhn SAS, 67700 Saverne (FR)
(72) Inventeur: DEMANET, Didier, 57820 SAINT-LOUIS (FR)
(74) Mandataire: Hager, Esther Evelyne

(56) Documents cités:
- FR-A- 1 472 155
- GB-A- 736 521
- JP-U- S57 176 949

## Description

La présente invention concerne le domaine du machinisme agricole et des équipements de telles machines, plus particulièrement les systèmes de transmission de mouvement de telles machines, et a pour objet un dispositif de boîte de vitesse pour une machine agricole et une machine équipée d'un tel dispositif.

Dans l'état de la technique, les boîtes de vitesse présentes dans la ligne de transmission de mouvement entre la prise de force du tracteur et la machine agricole reliée à ce dernier, comprennent généralement deux entrées, c'est-à-dire deux arbres d'entrée. Ainsi, lors de chaque changement de rapport de transmission il est nécessaire de débrancher l'arbre de transmission télescopique d'une entrée et de la brancher sur l'autre, et vice versa.

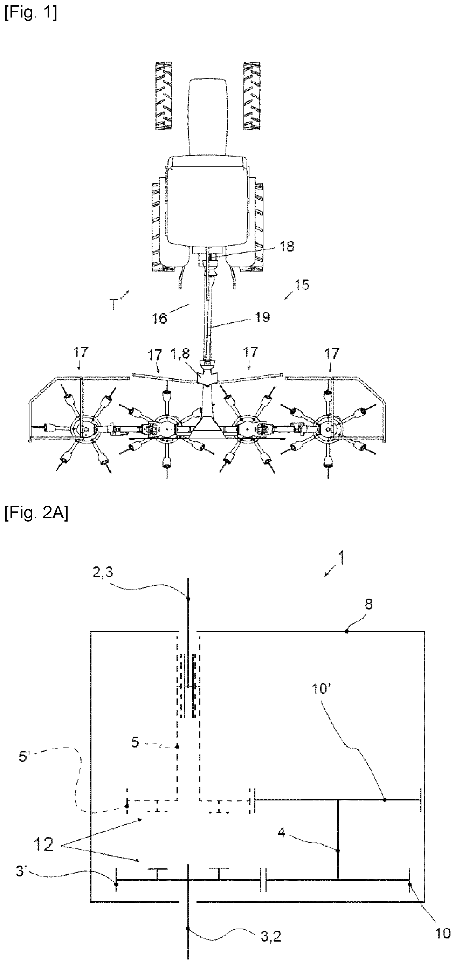

Pour les boîtes de vitesses intégrées à la machine (voir figure 1) et comprenant un mécanisme interne de changement de rapport de transmission, il est généralement nécessaire de faire tourner manuellement un élément de travail pour ajuster les dentitions des engrenages assurant les accouplements des arbres d'entrée et de sortie.

Or, pour pouvoir accéder à un élément de travail en même temps qu'on déplace un pignon pour changer de rapport de transmission, il faut que la boîte de vitesse soit proche des éléments de travail. De plus, dans le cas d'éléments de travail pointus ou coupants, l'utilisateur peut facilement se blesser lors de la préhension de l'élément de travail.

Par le document FR 2 778 443, on connait un dispositif de boîte de vitesse comprenant un arbre primaire, un arbre secondaire, au moins un arbre intermédiaire et un organe de transmission de mouvement mobile entre au moins deux positions opérationnelles dans lesquelles il établit entre les arbres primaire et secondaire des chaines cinématiques par engrènement avec des rapports de transmission différents, au moins l'une des chaînes cinématiques intégrant l'arbre intermédiaire, l'organe de transmission de mouvement passant par au moins une position de point mort lors de son déplacement entre les au moins deux positions opérationnelles précitées. Le document et FR 1 472 155 décrit également un tel dispositif de boite de vitesse.

Un inconvénient majeur de cette boîte de vitesse, d'ailleurs plutôt destinée à l'entrainement de roue(s) d'un véhicule automoteur, réside dans le fait qu'elle nécessite et comporte obligatoirement un accouplement par adhérence pour effectuer le changement de rapport de transmission, avec de possibles glissements : cette obligation complique la construction de la machine, renchérit son coût et nécessite un entretien régulier.

La présente invention a notamment pour but de pallier ces inconvénients.

A cet effet, elle a pour objet un dispositif de boîte de vitesse selon la revendication 1.

L'invention a également pour objet un procédé pour changer de rapport de transmission d'un tel dispositif de boite de vitesse selon la revendication 14.

L'invention sera mieux comprise, grâce à la description ci-après, qui se rapporte à un mode de réalisation préféré, donné à titre d'exemple non limitatif, et expliqué avec référence aux dessins schématiques annexés, dans lesquels :
[Fig. 1] représente un faneur relié à un tracteur et intégrant une boîte de vitesse proche des outils ou éléments travaillants ;
[Fig. 2A],

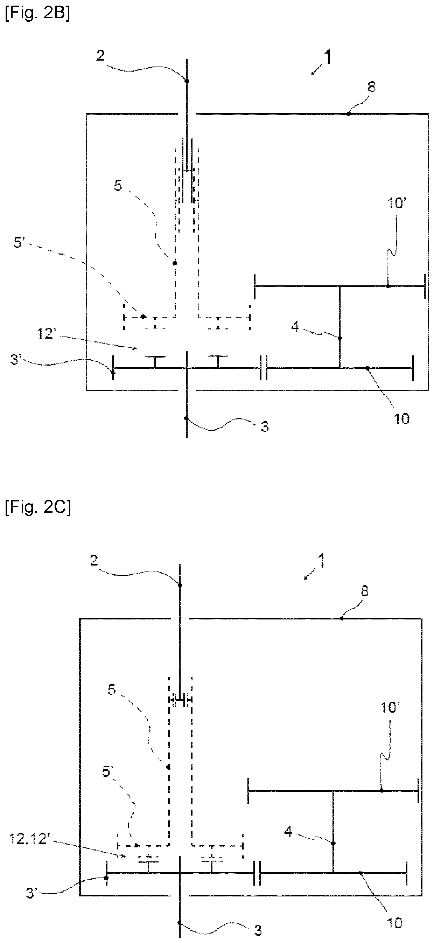

[Fig. 2B] et
[Fig. 2C] sont des vues en coupe schématiques, et en élévation selon un plan comprenant les axes de rotation des arbres, d'un dispositif de boîte de vitesse selon un mode de réalisation de l'invention respectivement dans trois configurations différentes correspondant à des positions différentes de l'organe de transmission de mouvement mobile, à savoir, dans un premier rapport de transmission (Fig 2A : la ligne de transmission du mouvement intégrant l'arbre intermédiaire), au point mort (Fig 2B : pas de transmission de mouvement entre les arbres primaire et secondaire) et dans un deuxième rapport de transmission (Fig 2C : prise directe entre organe de transmission de mouvement et arbre secondaire) ;
[Fig. 3A],
[Fig. 3B] et
[Fig. 3C] sont des vues en coupe similaires à celles des figures 2 (les configurations des figures 3A à 3C sont respectivement identiques à celles des figures 2A à 2C) d'un mode de réalisation préféré d'un dispositif tel que représenté schématiquement sur les figures 2 ;
[Fig. 4] est une vue en perspective du dispositif de boîte de vitesse des figures 3 ;
[Fig. 5A] et
[Fig. 5B] sont des vues en coupe selon des plans perpendiculaires aux axes de rotations des arbres du dispositif de boîte de vitesse des figures 3 et 4, et,
[Fig. 6] est une vue en coupe similaire à celles des figures 2 d'un mode de réalisation alternatif d'un dispositif selon l'invention .

Les figures 2 à 5 illustrent un dispositif de boîte de vitesse (1) pour machine agricole, comprenant un arbre primaire (2), un arbre secondaire (3), au moins un arbre intermédiaire (4) et un organe de transmission de mouvement (5) mobile entre au moins deux positions opérationnelles dans lesquelles il établit entre l'arbre primaire (2) et l'arbre secondaire (3) des chaines cinématiques par engrènement avec des rapports de transmission différents. Au moins l'une des chaînes cinématiques intègre l'arbre intermédiaire (4) et l'organe de transmission de mouvement (5) passe par au moins une position de point mort lors de son déplacement entre les au moins deux positions opérationnelles précitées.

Conformément à l'invention, le dispositif (1) comprend en outre un moyen (6) de pivotement permettant de faire pivoter par actionnement manuel au moins un des arbres primaire (2), secondaire (3) et intermédiaire (4) autour de son axe de rotation respectif lorsque l'organe de transmission de mouvement (5) est en position de point mort.

Ainsi, grâce à l'invention, il est fourni un moyen (6) de pivotement permettant l'ajustement de la position d'au moins un des arbres (2, 3, 4) autour de son axe de rotation permettant, par une action manuelle contrôlée de la part de l'utilisateur, de faire correspondre les dents des engrenages concernés à l'arrêt de la machine, pour pouvoir réaliser l'accouplement avec l'organe de transmission de mouvement (5) mobile, sans avoir à faire tourner les outils ou éléments travaillants à la main, évitant de ce fait les risques de blessures. De plus, l'intégration du moyen (6) de pivotement dans le dispositif (1) laisse plus de liberté quant à l'emplacement d'implantation du dispositif (1) sur la ligne de transmission. Plus particulièrement dans le cas d'une machine trainée, par exemple une faneuse ou faucheuse trainée, le fait de rapprocher le dispositif (1) de boîte de vitesse du tracteur (T) permet d'y accéder plus rapidement, accélérant ainsi le changement de rapport de transmission, ce sans prendre de risque près des éléments travaillants.

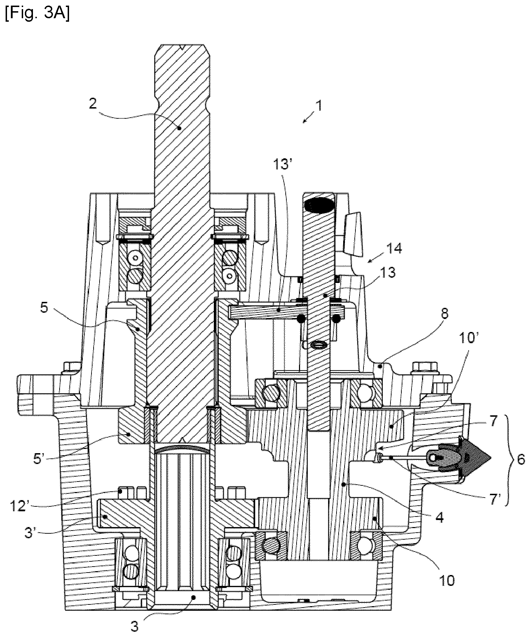

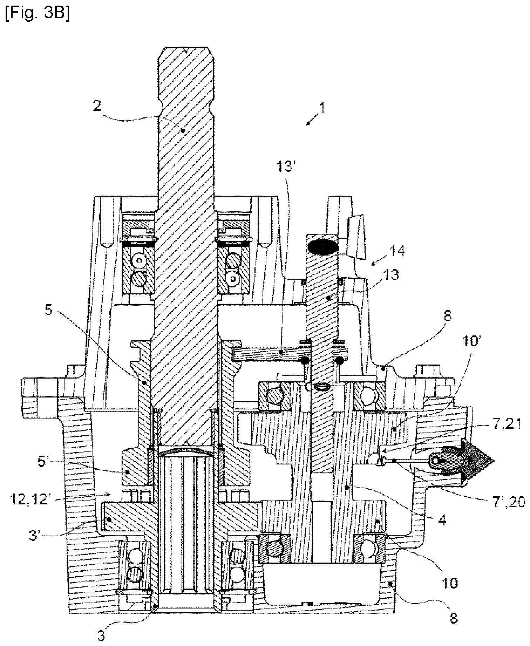

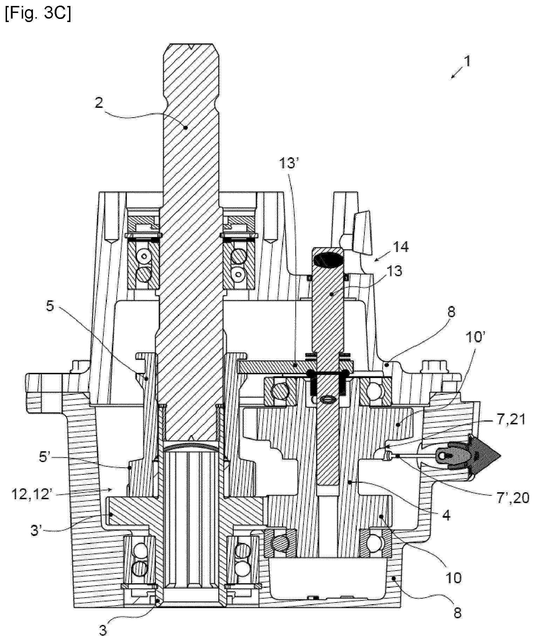

Comme le montrent les figures 2 et 3, et en accord avec un mode de réalisation simple et compacte de l'invention, l'organe de transmission de mouvement (5) est monté solidaire en rotation sur l'un des arbres primaire (2) ou secondaire (3). De plus, l'organe de transmission de mouvement (5) est monté avec faculté de translation selon l'axe de rotation de l'arbre (2, 3) sur lequel il est monté.

Le déplacement de l'organe de transmission de mouvement (5) peut par exemple être réalisé par le biais d'une poignée (13) de manoeuvre. La poignée (13) est manipulable de l'extérieur par l'utilisateur. Cette poignée (13) de manoeuvre est reliée rigidement en translation avec l'organe de transmission de mouvement (5) selon l'axe de rotation de l'arbre (2, 3) sur lequel il est monté. La poignée (13) est accessible et manipulable depuis la machine (15). Le déplacement de l'organe de transmission (5) n'a ainsi pas besoin d'une longue ligne de transmission pour être déplacé entre les positions opérationnelles et/ou position de point mort depuis un poste de conduite. Dans l'exemple de réalisation de la figure 1, le poste de conduite est la cabine du tracteur (T). A la différence d'un accouplement par adhérence notamment, une telle poignée (13) qui est fixe en translation avec l'organe de transmission de mouvement (5) selon l'axe de rotation de l'arbre (2, 3) sur lequel il est monté, permet à l'utilisateur de sentir au toucher lorsque les dents des engrenages concernés engrènent, par exemple lorsque les dents de l'organe de transmission (5) engrènent avec celles du pignon (10').

La poignée (13) de manoeuvre comporte ou est solidaire d'une fourchette (13') en prise avec l'organe de transmission de mouvement (5). Une extrémité de la fourchette (13') entre dans une gorge de l'organe de transmission de mouvement (5) permettant de lui transmettre au moins un mouvement translatif, de préférence selon l'axe de rotation de l'arbre intermédiaire (4). Dans la réalisation des figures 3, la poignée (13) de manoeuvre comporte une tige coulissante sur laquelle est fixée la fourchette (13'). La poignée (13), respectivement la fourchette (13'), est montée axialement coulissante selon l'axe de l'arbre intermédiaire (4) afin de déplacer l'organe de transmission de mouvement (5). A cet effet, l'arbre intermédiaire (4) comporte un perçage de guidage du coulissement de la poignée (13), permettant une meilleure compacité du dispositif de boite de vitesse (1). L'arbre intermédiaire (4) n'engrène cependant préférentiellement pas avec la poignée (13). Préférentiellement, il pivote autour de la poignée (13).

De préférence, la poignée (13) peut être bloquée axialement selon l'axe de l'arbre intermédiaire (4). L'arbre intermédiaire (4) est par ailleurs parallèle à l'arbre primaire (2). Dans chacune des positions opérationnelles, l'organe de transmission de mouvement (5) est maintenu à une position axialement fixe selon l'axe de rotation de l'arbre primaire (2).

Préférentiellement, le dispositif de boite de vitesse (1) comporte un carter (8) de protection. Ce carter (8) entoure au moins partiellement les arbres primaire, secondaire et intermédiaire (2, 3, 4). Le blocage de la poignée (13) peut être réalisé grâce à un canal (14) solidaire du carter (8). A cet effet, le canal (14) comprend deux zones d'appui pour la poignée (13) sensiblement orthogonale à l'axe de rotation de l'arbre intermédiaire (4).

Ainsi qu'il ressort de la figure 1, la machine (15) peut être attelée au tracteur (T) via un cadre d'attelage (16). La machine (15) peut notamment être une faneuse avec des rotors (17) équipés de doigts de râtelage et entrainés en rotation autour d'axes verticaux. La machine (15) comporte une ligne de transmission qui permet de transmettre un entrainement en rotation d'une prise de force (18) du tracteur (T) aux rotors (17). Cette ligne de transmission comporte au moins un arbre de transmission (19) télescopique à cardans. Les arbres (2, 3, 4) du dispositif (1) de boite de vitesse font également partie de cette ligne de transmission.

Ainsi que représenté sur la figure 1, au moins les axe des arbres primaire (2) et de la prise de force (18) du tracteur (T) sont sensiblement dans le même plan vertical, à l'état attelé de la machine (15), limitant ainsi les risques d'interférence entre le cadre d'attelage (16) et l'arbre de transmission (19) lors de braquages importants.

En relation avec un arrangement avantageux, l'arbre primaire (2) et l'arbre secondaire (3) présentent des axes de rotation confondus, permettant de gagner encore en compacité. Dans le mode de réalisation préféré des figures 2 et 3, en vue d'un nombre de pièces avantageusement limité, le dispositif de boite de vitesse (1) ne comporte qu'un seul arbre intermédiaire (4). L'axe de l'arbre intermédiaire (4) est de préférence décalé latéralement par rapport aux axes des arbres primaire et secondaire (2 et 3).

En accord avec une variante constructive préférée, de manière à gagner en compacité, l'organe de transmission de mouvement (5) est monté solidaire en rotation sur l'arbre primaire (2). A cet effet, l'organe de transmission de mouvement (5) comporte des cannelures internes pour assurer sa solidarité en rotation avec l'arbre concerné. L'arbre primaire (2) comportent des cannelures externes correspondantes aux cannelures internes de l'organe de transmission de mouvement (5). L'arbre primaire (2) engrène ainsi constamment avec l'organe de transmission de mouvement (5). De plus, un pignon baladeur (5') est solidaire en rotation avec l'organe de transmission de mouvement (5). De préférence, le pignon baladeur (5') fait partie de l'organe de transmission de mouvement (5). Un deuxième pignon intermédiaire (10') est en outre solidaire en rotation avec l'arbre intermédiaire (4). De préférence, le deuxième pignon intermédiaire (10') fait partie de l'arbre intermédiaire (4).

Dans le mode de réalisation préféré, le dispositif de boite de vitesse (1) comporte un seul arbre intermédiaire (4). De plus, un premier pignon intermédiaire (10) est solidaire en rotation avec l'arbre intermédiaire (4). Ainsi qu'il ressort des figures 3, dans le mode de réalisation préféré, le premier pignon intermédiaire (10) fait partie de l'arbre intermédiaire (4). Autrement dit, le premier pignon intermédiaire (10) et l'arbre intermédiaire (4) ne forment qu'une seule pièce.

Dans le mode de réalisation préféré, un pignon secondaire (3') est monté solidaire en rotation avec l'arbre secondaire (3). De préférence, le pignon secondaire (3') fait partie de l'arbre secondaire (3). Le premier pignon intermédiaire (10) engrène avec le pignon secondaire (3'), au moins dans une des positions opérationnelles. De préférence l'arbre intermédiaire (4) est accouplé en rotation avec l'arbre secondaire (3) de manière permanente.

Il ressort de ce qui précède que l'arbre intermédiaire (4) est accouplé en rotation de manière permanente avec celui des arbres primaire (2) et secondaire (3) sur lequel l'organe de transmission de mouvement (5) n'est pas monté (solidaire en rotation).

Ainsi qu'il ressort des figures 2A et 3A, l'organe de transmission de mouvement (5) peut présenter une première position opérationnelle dans laquelle l'arbre primaire (2) et l'arbre secondaire (3) sont cinématiquement reliés via l'arbre intermédiaire (4). Dans cette première position opérationnelle de l'organe de transmission de mouvement (5), le deuxième pignon intermédiaire (10') engrène avec le pignon baladeur (5'). Dans cette première position opérationnelle, l'organe de transmission de mouvement (5) établit ainsi une chaine cinématique entre les arbres primaire (2) et secondaire (3) dont le rapport de transmission est défini par les dimensions du pignon baladeur (5'), des pignons intermédiaires (10, 10') et du pignon secondaire (3'). A la première position opérationnelle de l'organe de transmission de mouvement (5) correspond ainsi un premier rapport de transmission.

Ainsi qu'il ressort des figures 2C et 3C, l'organe de transmission de mouvement (5) peut présenter une deuxième position opérationnelle dans laquelle l'arbre primaire (2) et l'arbre secondaire (3) ne sont pas reliés cinématiquement via l'arbre intermédiaire (4). Dans cette deuxième position opérationnelle de l'organe de transmission de mouvement (5), le deuxième pignon intermédiaire (10') n'engrène pas avec le pignon baladeur (5'). Dans le mode de réalisation préféré des figures 2C et 3C, dans cette deuxième position opérationnelle, l'organe de transmission de mouvement (5) établit ainsi une chaine cinématique par prise directe entre les arbres primaire (2) et secondaire (3), respectivement par prise directe entre l'arbre secondaire (3) et l'organe de transmission de mouvement (5). Dans cette position, le rapport de transmission entre l'arbre primaire (2) et l'arbre secondaire (3) est donc de 1. A la deuxième position opérationnelle de l'organe de transmission de mouvement (5) correspond ainsi un deuxième rapport de transmission. De préférence, les premier et deuxième rapport de transmission sont différents.

Dans le mode de réalisation préféré, l'arbre primaire (2) est l'arbre d'entrée. De plus, dans le mode de réalisation préféré, l'arbre secondaire (3) est l'arbre de sortie. Dans la première position opérationnelle de l'organe de transmission de mouvement (5), le premier rapport de transmission est un rapport de réduction. Le premier rapport de transmission du dispositif de boite de vitesse (1) est par exemple de ½ (un demi). Chaque position opérationnelle est obtenue par translation de l'organe de transmission de mouvement (5).

Ainsi, les deux positions opérationnelles du pignon baladeur (5') définissent deux chemins cinématiques de transmission de mouvement et de couple distincts, avec des rapports de transmission différents déterminés par les rapports d'engrenage.

Du fait de l'alignement des axes de rotation de l'arbre primaire (2) et de l'arbre secondaire (3), en vue de réduire l'encombrement du dispositif (1) de boite de vitesse, l'arbre (2, 3, 4) à pivoter pour faire correspondre les engrenages lors d'un changement de rapport de transmission est préférentiellement l'arbre intermédiaire (4). Le moyen (6) de pivotement est ainsi configuré pour faire pivoter l'arbre intermédiaire (4). Du fait que l'arbre intermédiaire (4) est accouplé en rotation de manière permanente avec l'arbre secondaire (3), l'actionnement du moyen (6) de pivotement implique la rotation de l'arbre intermédiaire (4) et de l'arbre secondaire (3) autour de leur axe de rotation respectif. Dans le mode de réalisation préféré, le moyen (6) de pivotement permet ainsi de faire pivoter par actionnement manuel les arbres secondaire (3) et intermédiaire (4) autour de leur axe de rotation respectif lorsque l'organe de transmission de mouvement (5) est en position de point mort. Autrement dit, le moyen (6) de pivotement permet de faire pivoter par actionnement manuel l'arbre secondaire (3) autour de l'axe de rotation de l'arbre secondaire (3) et l'arbre intermédiaire (4) autour de l'axe de rotation de l'arbre intermédiaire (4) lorsque l'organe de transmission de mouvement (5) est en position de point mort.

De plus, pour ne pas devoir fournir un effort trop important pour faire pivoter le ou les arbres (2, 3, 4), le moyen (6) de pivotement peut comprendre ou être associé à une roue libre agencée sur la ligne de transmission de la machine (15). Le dispositif de boite de vitesse (1) peut ainsi intégrer une roue libre qui autorise le pivotement du ou des arbre(s) (2, 3, 4) à pivoter dans le sens inverse du mouvement de rotation opérationnel du ou des arbres (2, 3, 4), facilitant ainsi l'actionnement du moyen (6) de pivotement. La roue libre pourrait notamment être agencée sur n'importe lequel des arbres (2, 3, 4) du dispositif (1).

L'actionnement du moyen (6) de pivotement permet d'aboutir à l'accouplement des engrenages concernés par la position opérationnelle désirée, respectivement par le rapport de transmission recherché. Dans le mode de réalisation préféré, afin d'aboutir à la première position opérationnelle, le moyen (6) de pivotement permet d'accoupler l'engrenage du pignon baladeur (5') avec celui du deuxième pignon intermédiaire (10'). Selon une caractéristique possible de l'invention, le moyen (6) de pivotement comprend un élément (7) solidaire en rotation d'un des arbres primaire (2) secondaire (3) et intermédiaire (4). De préférence, l'élément (7) est confondu avec un des arbres primaire (2), secondaire (3) et intermédiaire (4). Par exemple, l'élément (7) peut être usiné dans un des arbres primaire (2), secondaire (3) et intermédiaire (4). L'élément (7) comporte au moins une surface d'appui (7") orientée de manière à pouvoir engendrer un couple sur l'arbre (2, 3, 4) duquel l'élément (7) est solidaire en rotation, autour de l'axe de rotation de l'arbre (2, 3, 4) duquel l'élément (7) est solidaire en rotation, lorsqu'un effort est appliquée sur ladite surface d'appui (7"). Préférentiellement, l'élément (7) comporte plusieurs surfaces d'appui (7"), chacune orientée parallèlement à l'axe de pivotement de l'arbre (2, 3, 4) duquel l'élément (7) est solidaire en rotation.

En outre, le moyen (6) de pivotement peut comporter une manette (7') actionnable par l'utilisateur. Afin d'en faciliter l'accès, la manette (7') est actionnable manuellement depuis l'extérieur. Afin d'éviter une longue chaine de transmission, la manette (7') est en outre actionnable depuis la machine (15). Additionnellement, la manette (7') n'est préférentiellement solidaire en rotation d'aucun des arbres primaire (2), secondaire (3) et intermédiaire (4). Autrement dit, la manette (7') n'est solidaire en rotation ni de l'arbre primaire (2), ni de l'arbre secondaire (3), ni de l'arbre intermédiaire (4). La manette (7') n'est ainsi entrainée en rotation dans aucune des positions opérationnelles, de sorte que la partie de la manette (7') extérieure au carter (8) ne peut occasionner ni blessure, ni dégât.

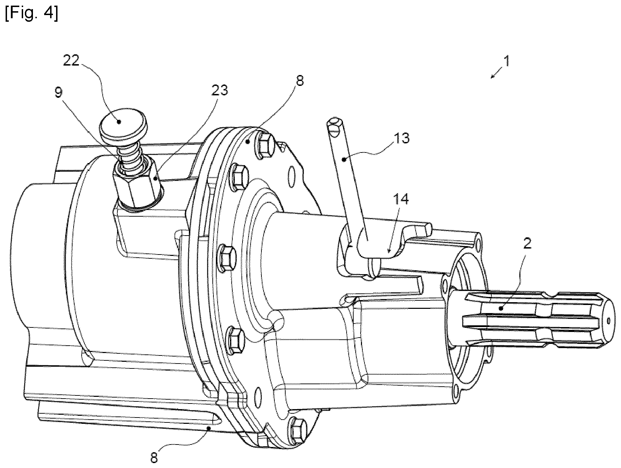

Plus précisément, dans le contexte précité, l'élément (7) peut être logé dans le carter (8). De plus, la manette (7') peut être montée traversante et mobile dans la paroi du carter (8). La manette (7') peut notamment être mobile par rapport au carter (8) dans le but de faire pivoter au moins un des arbres primaire (2), secondaire (3) et intermédiaire (4) en prenant appui sur une surface d'appui (7"). En intégrant le moyen (6) de pivotement au moins partiellement à l'intérieur du carter (8), le nombre de pièces et l'encombrement se trouve réduit. Comme le montrent les figures 3 et 4 à titre d'exemple, le carter (8) peut être composé de deux parties assemblées entre elles (par vissage) de manière étanche au niveau d'un plan de jonction.

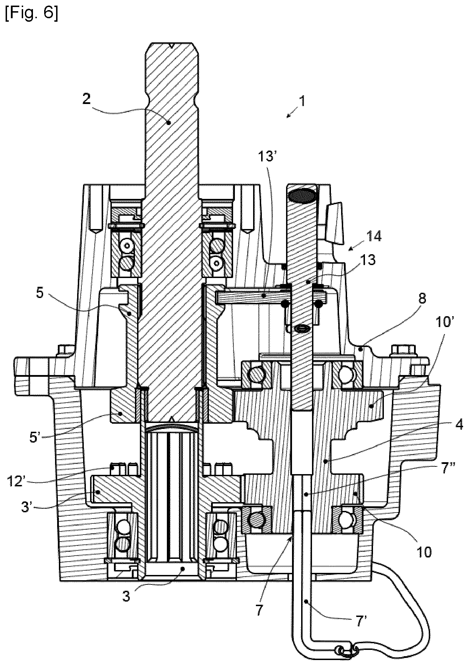

La manette (7') pourrait notamment être une clé faisant pivoter, par coopération de forme, au moins un des arbres primaire (2), secondaire (3) et intermédiaire (4) autour de son axe de rotation respectif. Dans le mode de réalisation alternatif de la figure 6, la clé pourrait être une clé Allen et l'élément (7) une encoche hexagonale correspondante à cette clé Allen, par exemple réalisée dans l'arbre intermédiaire (4) ou une pièce solidaire en rotation à l'arbre intermédiaire (4). La clé peut prendre appui sur plusieurs surfaces d'appui (7") de l'élément (7), comme dans le mode de réalisation de la figure 6. Un inconvénient d'une clé est cependant qu'elle peut être éloignée du dispositif de boîte de vitesse (1), voire perdue. Afin de pouvoir faire pivoter au moins un des arbres primaire (2), secondaire (3) et intermédiaire (4) rapidement et/ou sans avoir à le chercher, il peut être prévu que la manette (7') comporte un moyen de retenue la reliant au carter (8), comme par exemple un câble ou une chaîne. Un désavantage d'une telle réalisation est qu'elle nécessite un orifice dans le carter (8) situé du côté de l'arbre secondaire, qui est moins accessible. Surtout, l'orifice réalisé dans le carter (8) nécessite un bouchon pour éviter des pertes de lubrifiant et/ou un guidage en rotation de l'arbre concerné avec le carter (8). Dans un but de sécurisation, il est préférable d'éviter tout élément tournant à l'extérieur du carter (8). Ainsi, l'élément (7) est préférentiellement compris à l'intérieur du carter (8).

Selon une possible réalisation, à la fois simple et économique, la manette (7') peut être translatée par rapport au carter (8). La manette (7') comprend un cliquet (20) s'étendant au moins partiellement à l'intérieur du carter (8). De préférence, le cliquet (20) peut prendre appui sur une face solidaire de l'arbre (2, 3, 4) à pivoter pour lui transmettre un couple. Dans le mode de réalisation préféré, l'élément (7) du moyen (6) de pivotement est une roue (21). De préférence, le cliquet (20) peut prendre appui sur une surface d'appui (7") de la roue (21). La roue (21) présente une pluralité de surfaces d'appui (7") orientées parallèlement à l'axe de rotation de l'arbre intermédiaire (4). Chaque surface d'appui (7") de la roue (21) est en outre orientée sensiblement radialement par rapport à l'axe de rotation de l'arbre intermédiaire (4). Cette roue (21) est de préférence une roue à rochet. La roue (21) est préférentiellement solidaire en rotation de l'arbre intermédiaire (4), au moins selon un sens déterminé. Selon la réalisation représentée sur les figures, la roue (21) fait partie de l'arbre intermédiaire (4). Le cliquet (20) prend préférentiellement appui sur la roue (21) afin de faire pivoter l'arbre intermédiaire (4) autour de son axe de rotation et ainsi aboutir à l'engrènement autorisant l'établissement du rapport de transmission recherché. Dans le mode de réalisation préféré, la roue (21) est solidaire en rotation de l'arbre intermédiaire (4) uniquement selon le sens inverse du mouvement de rotation opérationnel de l'arbre intermédiaire (4).

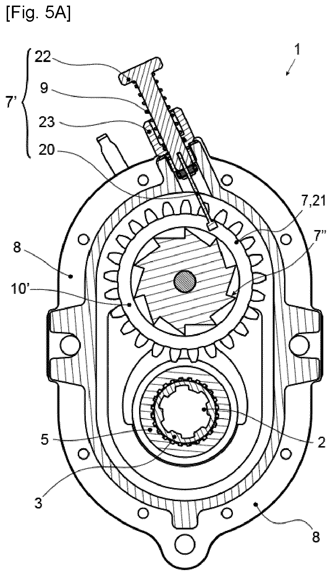

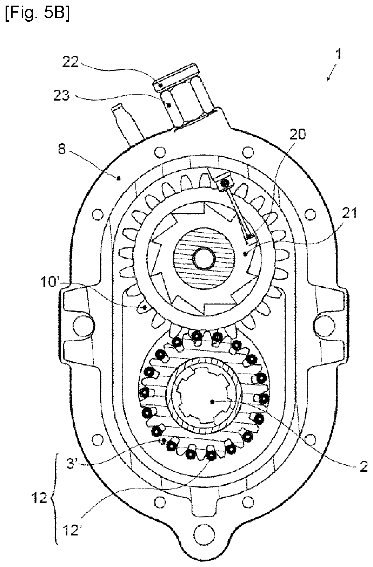

Conformément à un mode de réalisation de la manette (7'), celle-ci peut comprendre un poussoir (22). Le poussoir est de préférence solidaire du cliquet (20). Ce poussoir (22) s'étend au moins partiellement à l'extérieur du carter (8). La manette (7') du moyen (6) est montée avec faculté de déplacement en translation par rapport au carter (8). De préférence, la manette (7) est montée avec faculté de déplacement en translation sensiblement tangentielle par rapport à la roue (21) à rochet. Lors de l'utilisation de la machine (15), le cliquet (20) est dans une position rétractée représentée sur la figure 5A. La position rétractée du cliquet (20) est aussi sa position de repos. L'actionnement manuel du moyen (6) correspond à faire translater le poussoir (22) de sorte que le cliquet (20) prenne appui sur la roue (21) et fasse pivoter l'arbre (2, 3, 4) avec lequel la roue (21) est solidaire. Sur la figure 5B, le cliquet (20) est en position engagée avec la roue (21). Dans le mode de réalisation préféré, l'actionnement du moyen (6) de pivotement permet le pivotement de l'arbre intermédiaire (4).

Le retour du cliquet (20) correspond à sa translation entre sa position engagée et sa position rétractée. Afin d'éviter la nécessité d'un actionnement supplémentaire pour le retour du cliquet (20), il peut être prévu en outre un ressort (9) de rappel. Ce ressort (9) sollicite le poussoir (22) dans la position rétractée du cliquet (20). Dans sa position rétractée, le poussoir (22) est désengagé et non interférant par rapport à la roue (21). Ce retour automatique du cliquet (20) dans sa position rétractée assure que ce dernier ne perturbe pas le mouvement de rotation en utilisation courante de l'arbre concerné, et évite l'endommagement du cliquet (20).

Il peut être déduit de la figure 5B que lors du retour du cliquet (20), celui-ci pourrait interférer avec la roue (21), respectivement avec le cran adjacent à celui sur lequel le cliquet (20) prend appui, ce qui pourrait amener à endommager le cliquet (20). Selon un mode de réalisation non représenté, pour assurer le retour du cliquet (20) dans sa position rétractée sans l'endommager, le cliquet (20) est articulé avec le poussoir (22) selon un axe d'articulation orienté perpendiculairement à l'axe de rotation de l'arbre concerné, à savoir de l'arbre intermédiaire (4) dans le mode de réalisation préféré. Selon le mode de réalisation préféré, le cliquet (20) est fixé de manière rigide sur le poussoir (22). De plus, le cliquet (20) est configuré pour pouvoir fléchir lors de son retour en configuration rétractée. De préférence, le cliquet (20) est flexible. En prévoyant un système à cliquet (20) flexible et translatif tangentiellement, prenant appui sur les surfaces d'appui (7") correspondantes de la dentition de la roue (21) à rochet, il est possible de disposer d'un cliquet dépourvu de l'articulation pivotante traditionnelle, mais qui néanmoins s'efface sans endommagement lorsqu'il revient dans sa position rétractée. Ceci est également obtenu grâce aux dents de la roue (21) à rochet taillées en conséquence.

En accord avec une caractéristique constructive pratique, la manette (7') est montée par vissage dans le carter (8), au niveau d'un orifice de ce dernier, ce qui autorise sa maintenance et son démontage aisés depuis l'extérieur. De préférence, la manette (7') comporte une vis (23) dans laquelle le poussoir (22) est assemblé avec un jeu d'ajustement positif. De la sorte, le poussoir peut translater dans la vis (23) par rapport à cette dernière et par rapport au carter (8). De plus, cette vis (23) peut être configurée et arrangée pour constituer un bouchon de vidange d'huile et/ou faire office de niveau d'huile.

Pour des considérations de compacité, de simplicité constructive et de coût, les crans de la roue (21) à rochet peuvent être directement taillés dans l'arbre intermédiaire (4).

Ainsi que représenté sur les figures 2C et 3C, dans la deuxième position opérationnelle la prise directe entre l'organe de transmission de mouvement (5) et l'arbre secondaire (3) est réalisé par un crabot (12). A cet effet, le pignon secondaire (3'), respectivement l'arbre secondaire (3), est pourvu d'un engrenage (12') spécifique à cette prise directe. De préférence, l'arbre secondaire (3), respectivement l'engrenage (12') spécifique à la prise directe est destiné à coopérer avec l'engrenage du pignon baladeur (5'). Cet engrenage (12') spécifique est préférentiellement réalisé par une pluralité de dents insérées ou taillées directement dans l'arbre secondaire (3), permettant d'aboutir à une construction simple (pas ou peu de pièce(s) supplémentaire(s)), robuste et compacte. Dans le mode de réalisation des figures, en vue de simplifier sa fabrication et/ou son usinage, les dents de l'engrenage (12') sont cylindriques, de préférence encastrées dans un perçage. Ainsi qu'il ressort de la figure 5B, les dents cylindriques de l'engrenage (12') spécifique à la prise directe sont tels qu'elles s'insèrent entre deux dents du pignon baladeur (5'). La réalisation par crabot (12) permet que, pour changer de rapport de transmission, seule l'organe de transmission de mouvement (5) doit être déplacé axialement. Dans le mode préféré, les pignons intermédiaires (10, 10') et secondaire (3') n'ont ainsi pas besoin d'être déplacés axialement pour changer de rapport de transmission. Dans le mode de réalisation préféré, afin d'aboutir à la deuxième position opérationnelle, le moyen (6) de pivotement permet d'accoupler par prise directe le pignon baladeur (5') et l'arbre secondaire (3), respectivement le pignon secondaire (3'), par le crabot (12).

Ainsi, pour changer de rapport de transmission, on attend l'arrêt de la machine (15), on dégage d'abord l'arbre primaire (2) de l'arbre secondaire (3) en faisant coulisser l'organe de transmission de mouvement (5) selon son axe de rotation/translation depuis l'une des positions opérationnelles vers une position de point mort. Dans la position de point mort, l'organe de transmission de mouvement (5) n'établit aucune liaison cinématique entre l'arbre primaire (2) et l'arbre secondaire (3). Ensuite, tout en maintenant la pression axiale par le biais de la poignée (13), selon un sens ou l'autre en fonction du rapport recherché, les arbres primaire et secondaire sont engrenés grâce à un ajustement par le biais du moyen (6) de pivotement, jusqu'à ce que le nouveau chemin de transmission de couple soit établi. Durant cette séquence de changement de rapport de transmission, lorsque le pignon baladeur (5') de l'organe de transmission de mouvement (5) aura été désengagé, par action sur la poignée (13), d'une des positions opérationnelles et donc de l'arbre avec lequel il engrenait, il sera déplacé dans l'autre position opérationnelle, et donc mis en engagement engrenant/crabotant avec l'autre arbre, par pression sur la poignée (13) et ajustement de la position de cet autre arbre par le biais du moyen (6) agissant sur l'arbre intermédiaire (4), jusqu'à aboutir à l'engrènement mutuel des dentures/crabots du pignon baladeur et de cet autre arbre.

Il ressort de ce qui précède que changer de rapport de transmission consiste d'abord à attendre l'arrêt en rotation des arbres primaire (2), secondaire (3) et intermédiaire (4), ensuite à déplacer axialement l'organe de transmission de mouvement (5) jusqu'à la position de point mort, puis à exercer un effort axial sur l'organe de transmission de mouvement (5) dans la même direction - que son déplacement précédent - tout en actionnant manuellement le moyen (6) de pivotement permettant de faire pivoter au moins un des arbres primaire (2), secondaire (3) et intermédiaire (4) autour de son axe de rotation respectif, ce jusqu'à l'accouplement des engrenages concernés.

Dans le mode de réalisation des figures, changer le rapport de transmission du dispositif de boîte de vitesse (1) dans un premier rapport de vitesse consiste à d'abord à attendre l'arrêt en rotation des arbres primaire (2), secondaire (3) et intermédiaire (4), ensuite à déplacer axialement l'organe de transmission de mouvement (5) en direction de l'arbre secondaire (3) jusqu'à la position de point mort, puis à exercer un effort axial sur l'organe de transmission de mouvement (5) dans la même direction tout en actionnant manuellement le moyen (6) de pivotement permettant de faire pivoter au moins un des arbres primaire (2), secondaire (3) et intermédiaire (4) autour de son axe de rotation respectif, ce jusqu'à l'accouplement de l'organe de transmission de mouvement (5) et de l'arbre intermédiaire (4), respectivement jusqu'à l'accouplement du pignon baladeur (5') solidaire en rotation de l'organe de transmission de mouvement (5) et du deuxième pignon intermédiaire (10') solidaire en rotation avec l'arbre intermédiaire (4).

De plus, changer le rapport de transmission du dispositif de boîte de vitesse (1) dans un deuxième rapport de vitesse consiste à d'abord attendre l'arrêt en rotation des arbres primaire (2), secondaire (3) et intermédiaire (4), ensuite à déplacer axialement l'organe de transmission de mouvement (5) dans la direction opposée à l'arbre secondaire (3) jusqu'à la position de point mort, puis à exercer un effort axial sur l'organe de transmission de mouvement (5) dans la même direction - opposée à l'arbre secondaire (3) - tout en actionnant manuellement le moyen (6) de pivotement permettant de faire pivoter au moins un des arbres primaire (2), secondaire (3) et intermédiaire (4) autour de son axe de rotation respectif, ce jusqu'à l'accouplement de l'organe de transmission de mouvement (5) et de l'arbre secondaire (3), respectivement jusqu'à l'accouplement d'une prise directe entre l'organe de transmission de mouvement (5) et de l'arbre secondaire (3).

On peut également noter sur les figures 3, que l'axe de la poignée (13) passe avantageusement dans l'arbre intermédiaire (4), avec confusion des axes, aboutissant à une construction compacte et permettant de bloquer le verrouillage de la poignée (13) par frottement avec l'arbre intermédiaire (4), qui tourne toujours dans le même sens.

Selon une construction pratique préférée du dispositif (1), ressortant des figures, il est prévu que :
- l'arbre intermédiaire (4) comprenne un premier pignon intermédiaire (10) engrenant avec un pignon secondaire (3') solidaire en rotation de l'arbre secondaire (3) et un deuxième pignon intermédiaire (10'),
- qu'un pignon baladeur (5') est solidaire en rotation avec l'organe de transmission de mouvement (5), et
- que dans une ou la première position opérationnelle le pignon baladeur (5') engrène avec le deuxième pignon intermédiaire (10') et que dans la ou une seconde position opérationnelle, l'arbre primaire (2) est cinématiquement relié à l'arbre secondaire (3) par prise directe.

L'invention a été décrite ci-dessus en relation avec un dispositif de boîte de vitesse (1) proposant deux chemins de transmission de couple, et donc la sélection de deux rapports de transmission possible entre l'arbre d'entrée et l'arbre de sortie. Mais l'invention vise aussi un dispositif (non représenté) pouvant fournir plus de deux rapports par exemple par la prévision d'au moins un arbre intermédiaire supplémentaire permettant d'établir un autre chemin de transmission, avec un autre rapport, que l'arbre intermédiaire (4) représenté, entre l'organe de transmission de mouvement (5) et l'arbre de sortie (3).

L'invention porte également sur une machine agricole (15) destinée à être reliée à un tracteur (T) par l'intermédiaire d'une prise de force (18), caractérisée en ce qu'elle comporte un dispositif de boîte de vitesse (1) tel que décrit ci-dessus.

Bien entendu, l'invention n'est pas limitée au mode de réalisation décrit et représenté aux dessins annexés. Des modifications restent possibles, notamment du point de vue de la constitution des divers éléments ou par substitution d'équivalents techniques, sans sortir pour autant du domaine de protection de l'invention.

## Revendications

1. Dispositif de boîte de vitesse (1) pour machine agricole comprenant un arbre primaire (2), un arbre secondaire (3), au moins un arbre intermédiaire (4) et un organe de transmission de mouvement (5) mobile entre au moins deux positions opérationnelles dans lesquelles il établit entre l'arbre primaire (2) et l'arbre secondaire (3) des chaines cinématiques par engrènement avec des rapports de transmission différents, au moins l'une des chaînes cinématiques intégrant l'arbre intermédiaire (4), l'organe de transmission de mouvement (5) passant par au moins une position de point mort lors de son déplacement entre les au moins deux positions opérationnelles précitées,
dispositif de boîte de vitesse (1) **caractérisé en ce qu'**il comprend un moyen (6) de pivotement permettant de faire pivoter par actionnement manuel au moins un des arbres primaire (2), secondaire (3) et intermédiaire (4) autour de son axe de rotation respectif lorsque l'organe de transmission de mouvement (5) est en position de point mort.

2. Dispositif de boîte de vitesse selon la revendication 1, **caractérisé en ce que** l'organe de transmission de mouvement (5) est monté solidaire en rotation sur l'un des arbres primaire (2) ou secondaire (3), l'organe de transmission de mouvement (5) étant monté avec faculté de translation selon l'axe de rotation de l'arbre (2, 3) sur lequel il est monté.

3. Dispositif de boîte de vitesse selon l'une quelconque des revendications 1 et 2, **caractérisé en ce que** l'arbre primaire (2) et l'arbre secondaire (3) présentent des axes de rotation confondus.

4. Dispositif de boîte de vitesse selon l'une quelconque des revendications 2 et 3, **caractérisé en ce que** l'organe de transmission de mouvement (5) présente une première position opérationnelle dans laquelle l'arbre primaire (2) et l'arbre secondaire (3) sont cinématiquement reliés via l'arbre intermédiaire (4), et une deuxième position opérationnelle dans laquelle l'arbre primaire (2) et l'arbre secondaire (3) ne sont pas reliés cinématiquement via l'arbre intermédiaire (4).

5. Dispositif de boîte de vitesse selon la revendication 2 ou l'une quelconque des revendications 3 et 4, pour autant qu'elles se rattachent à la revendication 2, **caractérisé en ce que** le l'arbre intermédiaire (4) est accouplé en rotation de manière permanente avec celui des arbres primaire (2) et secondaire (3) sur lequel l'organe de transmission de mouvement (5) n'est pas monté.

6. Dispositif de boîte de vitesse selon l'une quelconque des revendications 1 à 5, **caractérisé en ce que** le moyen (6) de pivotement comprend un élément (7) solidaire en rotation d'un des arbres primaire (2), secondaire (3), et intermédiaire (4).

7. Dispositif de boîte de vitesse selon l'une quelconque des revendications 1 à 6, **caractérisé en ce que** le moyen (6) de pivotement comporte une manette (7') actionnable par l'utilisateur et avantageusement montée traversante et mobile dans la paroi d'un carter (8).

8. Dispositif de boîte de vitesse selon la revendication 6, **caractérisé en ce que** l'élément (7) du moyen (6) de pivotement est une roue (21) à rochet solidaire en rotation de l'arbre intermédiaire (4) au moins selon un sens déterminé.

9. Dispositif de boîte de vitesse selon la revendication 7, **caractérisé en ce que** la manette (7') comprend un poussoir (22), et **en ce qu'**elle est montée avec faculté de déplacement en translation par rapport au ou à un carter (8).

10. Dispositif de boîte de vitesse selon les revendications 7 à 9, **caractérisé en ce que** la manette (7') est montée avec faculté de déplacement en translation sensiblement tangentielle par rapport à la roue à rochet (21).

11. Dispositif de boîte de vitesse selon l'une quelconque des revendications 7 à 10, **caractérisé en ce que** la manette (7') comprend un cliquet (20) flexible s'étendant au moins partiellement à l'intérieur du carter (8).

12. Dispositif de boîte de vitesse selon l'une quelconque des revendications 1 à 11, **caractérisé en ce que** l'arbre intermédiaire (4) comprend un premier pignon intermédiaire (10) engrenant avec un pignon secondaire (3') solidaire en rotation de l'arbre secondaire (3) et un deuxième pignon intermédiaire (10'), **en ce qu'**un pignon baladeur (5') est solidaire en rotation avec l'organe de transmission de mouvement (5), et **en ce que** dans une ou la première position opérationnelle le pignon baladeur (5') engrène avec le deuxième pignon intermédiaire (10') et dans la ou une seconde position opérationnelle, l'arbre primaire (2) est cinématiquement relié à l'arbre secondaire (3) par prise directe.

13. Machine agricole (15) destinée à être reliée à un tracteur (T) par l'intermédiaire d'une prise de force (18), **caractérisée en ce qu'**elle comporte un dispositif de boîte de vitesse (1) selon l'une quelconque des revendications 1 à 12.

14. Procédé de changement de rapport de transmission d'un dispositif de boîte de vitesse (1) pour machine agricole selon l'une quelconque des revendications 1 à 12, **caractérisé en ce que** changer le rapport de transmission du dispositif de boîte de vitesse (1) dans un premier rapport de vitesse consiste à d'abord à attendre l'arrêt en rotation des arbres primaire (2), secondaire (3) et intermédiaire (4), ensuite à déplacer axialement l'organe de transmission de mouvement (5) en direction de l'arbre secondaire (3) jusqu'à la position de point mort, puis à exercer un effort axial sur l'organe de transmission de mouvement (5) dans la même direction tout en actionnant manuellement le moyen (6) de pivotement permettant de faire pivoter au moins un des arbres primaire (2), secondaire (3) et intermédiaire (4) autour de son axe de rotation respectif, ce jusqu'à l'accouplement de l'organe de transmission de mouvement (5) et de l'arbre intermédiaire (4).

15. Procédé de changement de rapport de transmission d'un dispositif de boîte de vitesse (1) pour machine agricole selon la revendication 14, caractérisé en ce pour changer le rapport de transmission du dispositif de boîte de vitesse (1) dans un deuxième rapport de vitesse consiste à d'abord attendre l'arrêt en rotation des arbres primaire (2), secondaire (3) et intermédiaire (4), ensuite à déplacer axialement l'organe de transmission de mouvement (5) dans la direction opposée à l'arbre secondaire (3) jusqu'à la position de point mort, puis à exercer un effort axial sur l'organe de transmission de mouvement (5) dans la direction opposée à l'arbre secondaire (3) tout en actionnant manuellement le moyen (6) de pivotement permettant de faire pivoter au moins un des arbres primaire (2), secondaire (3) et intermédiaire (4) autour de son axe de rotation respectif, ce jusqu'à l'accouplement.

## Patentansprüche

1. Getriebevorrichtung (1) für eine landwirtschaftliche Maschine, mit einer Hauptwelle (2), einer Nebenwelle (3), mindestens einer Zwischenwelle (4) und einem Bewegungsübertragungselement (5), das zwischen mindestens zwei Betriebspositionen beweglich ist, in denen es zwischen der Haupt- (2) und der Nebenwelle (3) kinematische Antriebsketten durch Eingriff mit unterschiedlichen Übertragungsverhältnissen herstellt, wobei in mindestens einer der kinematischen Antriebsketten die Zwischenwelle (4) integriert ist, wobei das Bewegungsübertragungselement (5) bei seiner Bewegung zwischen den mindestens zwei oben genannten Betriebspositionen mindestens eine Leerlaufstellung durchläuft,
Getriebevorrichtung (1) **dadurch gekennzeichnet, dass** sie ein Schwenkmittel (6) umfasst, das es ermöglicht, durch manuelle Betätigung mindestens eine der Haupt- (2), Neben- (3) und Zwischenwellen (4) um ihre jeweilige Drehachse zu schwenken, wenn sich das Bewegungsübertragungselement (5) in der Leerlaufstellung befindet.

2. Getriebevorrichtung nach Anspruch 1, **dadurch gekennzeichnet, dass** das Bewegungsübertragungselement (5) drehfest auf einer der Hauptwelle (2) oder der Nebenwelle (3) montiert ist, wobei das Bewegungsübertragungselement (5) entlang der Drehachse der Welle (2, 3), auf der es montiert ist, translatorisch beweglich gelagert ist.

3. Getriebevorrichtung nach irgendeinem der Ansprüche 1 und 2, **dadurch gekennzeichnet, dass** die Hauptwelle (2) und die Nebenwelle (3) zusammenfallende Drehachsen aufweisen.

4. Getriebevorrichtung nach irgendeinem der Ansprüche 2 und 3, **dadurch gekennzeichnet, dass** das Bewegungsübertragungselement (5) eine erste Betriebsposition aufweist, in der die Hauptwelle (2) und die Nebenwelle (3) über die Zwischenwelle (4) kinematisch miteinander verbunden sind, und eine zweite Betriebsposition, in der die Hauptwelle (2) und die Nebenwelle (3) nicht über die Zwischenwelle (4) kinematisch verbunden sind.

5. Getriebevorrichtung nach Anspruch 2 oder irgendeinem der Ansprüche 3 und 4, sofern sie sich auf Anspruch 2 beziehen, **dadurch gekennzeichnet, dass** die Zwischenwelle (4) dauerhaft drehbar mit derjenigen der Haupt- (2) und Nebenwelle (3) gekoppelt ist, auf der das Bewegungsübertragungselement (5) nicht montiert ist.

6. Getriebevorrichtung nach irgendeinem der Ansprüche 1 bis 5, **dadurch gekennzeichnet, dass** das Schwenkmittel (6) ein Element (7) umfasst, das drehfest mit einer der Hauptwelle (2), der Nebenwelle (3) und der Zwischenwelle (4) verbunden ist.

7. Getriebevorrichtung nach irgendeinem der Ansprüche 1 bis 6, **dadurch gekennzeichnet, dass** das Schwenkmittel (6) einen vom Benutzer betätigbaren Hebel (7') umfasst, der vorteilhafterweise durchgehend und beweglich in der Wand eines Gehäuses (8) angebracht ist.

8. Getriebevorrichtung nach Anspruch 6, **dadurch gekennzeichnet, dass** das Element (7) des Schwenkmittels (6) ein Klinkenrad (21) ist, das zumindest in einer bestimmten Richtung drehfest mit der Zwischenwelle (4) verbunden ist.

9. Getriebevorrichtung nach Anspruch 7, **dadurch gekennzeichnet, dass** der Hebel (7') einen Schieber (22) umfasst und dadurch, dass er in Bezug auf das oder ein Gehäuse (8) translatorisch beweglich angebracht ist.

10. Getriebevorrichtung nach den Ansprüchen 7 bis 9, **dadurch gekennzeichnet, dass** der Hebel (7') im Wesentlichen tangential in Bezug auf das Klinkenrad (21) translatorisch beweglich angebracht ist.

11. Getriebevorrichtung nach irgendeinem der Ansprüche 7 bis 10, **dadurch gekennzeichnet, dass** der Hebel (7') eine flexible Ratsche (20) umfasst, die sich zumindest teilweise innerhalb des Gehäuses (8) erstreckt.

12. Getriebevorrichtung nach irgendeinem der Ansprüche 1 bis 11, **dadurch gekennzeichnet, dass** die Zwischenwelle (4) ein erstes Zwischenritzel (10), das mit einem Nebenritzel (3') ineinandergreift, das drehfest mit der Nebenwelle (3) verbunden ist, und ein zweites Zwischenritzel (10') umfasst, dadurch, dass ein verschiebbares Ritzel (5') drehfest mit dem Bewegungsübertragungselement (5) verbunden ist und dadurch, dass in einer oder der ersten Betriebsposition das verschiebbare Ritzel (5') mit dem zweiten Zwischenritzel (10') ineinandergreift und dass in der oder einer zweiten Betriebsposition die Hauptwelle (2) kinematisch durch direkten Eingriff mit der Nebenwelle (3) verbunden ist.

13. Landwirtschaftliche Maschine (15), die dazu bestimmt ist, über eine Zapfwelle (18) mit einem Schlepper (T) verbunden zu werden, **dadurch gekennzeichnet, dass** sie eine Getriebevorrichtung (1) nach irgendeinem der Ansprüche 1 bis 12 umfasst.

14. Verfahren zur Änderung des Übertragungsverhältnisses einer Getriebevorrichtung (1) für eine landwirtschaftliche Maschine nach irgendeinem der Ansprüche 1 bis 12, **dadurch gekennzeichnet, dass** das Ändern des Übertragungsverhältnisses der Getriebevorrichtung (1) in einen ersten Gang darin besteht, zunächst den Drehstillstand der Hauptwelle (2), der Nebenwelle (3) und der Zwischenwelle (4) abzuwarten, dann das Bewegungsübertragungselement (5) axial in Richtung der Nebenwelle (3) bis zur Leerlaufstellung zu verschieben, dann eine axiale Kraft auf das Bewegungsübertragungselement (5) in der gleichen Richtung auszuüben, während das Schwenkmittel (6) manuell betätigt wird, das es ermöglicht, mindestens eine der Hauptwelle (2), der Nebenwelle (3) und der Zwischenwelle (4) um ihre jeweilige Drehachse zu schwenken, und zwar bis zur Kopplung des Bewegungsübertragungselements (5) und der Zwischenwelle (4).

15. Verfahren zur Änderung des Übertragungsverhältnisses einer Getriebevorrichtung (1) für eine landwirtschaftliche Maschine nach Anspruch 14, **dadurch gekennzeichnet, dass** das Ändern des Übertragungsverhältnisses der Getriebevorrichtung (1) in einen zweiten Gang darin besteht, zunächst den Drehstillstand der Hauptwelle (2), der Nebenwelle (3) und der Zwischenwelle (4) abzuwarten, dann das Bewegungsübertragungselement (5) axial in die der Nebenwelle (3) entgegengesetzte Richtung bis zur Leerlaufstellung zu verschieben, dann eine axiale Kraft auf das Bewegungsübertragungselement (5) in die der Nebenwelle (3) entgegengesetzte Richtung auszuüben, während das Schwenkmittel (6) manuell betätigt wird, das es ermöglicht, mindestens eine der Hauptwelle (2), der Nebenwelle (3) und der Zwischenwelle (4) um ihre jeweilige Drehachse zu schwenken, und zwar bis zur Kopplung.

## Claims

1. Gearbox device (1) for agricultural machine comprising a primary shaft (2), a secondary shaft (3), at least one intermediate shaft (4), and a motion transmission element (5) moveable between at least two operating positions in which it sets up intermeshing drive lines between the primary shaft (2) and the secondary shaft (3) with different gear ratios, at least one of the drive lines incorporating the intermediate shaft (4), the motion transmission element (5) passing through at least one neutral position during its movement between the at least two aforementioned operating positions;
gearbox device (1) **characterized in that** it comprises a pivoting means (6) that makes it possible, by manual operation, to make at least one of the primary (2), secondary (3), and intermediate (4) shafts pivot around its respective rotation axis when the motion transmission element (5) is in the neutral position.

2. Gearbox device according to claim 1, **characterized in that** the motion transmission element (5) is mounted locked in rotation on one of the primary (2) or the secondary (3) shafts, the motion transmission element (5) being mounted with the ability to move in translation along the rotation axis of the shaft (2, 3) on which it is mounted.

3. Gearbox device according to any one of claims 1 and 2, **characterized in that** the primary shaft (2) and the secondary shaft (3) have coincident rotation axes.

4. Gearbox device according to any one of claims 2 and 3, **characterized in that** the motion transmission element (5) has a first operating position, in which the primary shaft (2) and the secondary shaft (3) are kinematically connected via the intermediate shaft (4), and a second operating position, in which the primary shaft (2) and the secondary shaft (3) are not kinematically connected via the intermediate shaft (4).

5. Gearbox device according to claim 2 or any one of claims 3 and 4 insofar as they relate to claim 2, **characterized in that** the intermediate shaft (4) is permanently coupled in rotation with that one of the primary (2) and secondary (3) shafts on which the motion transmission element (5) is not mounted.

6. Gearbox device according to any one of claims 1 to 5, **characterized in that** the pivoting means (6) comprises an element (7) locked in rotation with one of the primary (2), secondary (3), and intermediate (4) shafts.

7. Gearbox device according to any one of claims 1 to 6, **characterized in that** the pivoting means (6) comprises a handle (7') that can be operated by the user and advantageously be mounted passing through, and mobile in, the wall of a casing (8).

8. Gearbox device according to claim 6, **characterized in that** the element (7) of the pivoting means (6) is a ratchet wheel (21) locked in rotation with the intermediate shaft (4), at least along a given direction.

9. Gearbox device according to claim 7, **characterized in that** the handle (7') comprises a push-button (22), and **in that** it is mounted with the ability to move in translation relative to the or a casing (8).

10. Gearbox device according to claims 7 to 9, **characterized in that** the handle (7') is mounted with the ability to move in substantially tangential translation relative to the ratchet wheel (21).

11. Gearbox device according to any one of claims 7to 10, **characterized in that** the handle (7') comprises a flexible ratchet (20) extending at least partially inside the casing (8).

12. Gearbox device according to any one of claims 1 to 11, **characterized in that** the intermediate shaft (4) comprises a first intermediate pinion (10) meshing with a secondary pinion (3') locked in rotation with the secondary shaft (3) and a second intermediate pinion (10'), **in that** a slidable pinion (5') is locked in rotation with the motion transmission element (5), and **in that** in one or in the first operating position, the slidable pinion (5') meshes with the second intermediate pinion (10') and in the or a second operating position, the primary shaft (2) is kinematically connected to the secondary shaft (3) by direct drive.

13. Agricultural machine (15) intended to be connected to a tractor (T) by means of a power take-off shaft (18), **characterized in that** it comprises a gearbox device (1) according to any one of claims 1 to 12.

14. Method for changing the transmission ratio of a gearbox device (1) for an agricultural machine according to any one of claims 1 to 12, **characterized in that** changing the transmission ratio of the gearbox device (1) to a first ratio consists first in waiting for the primary (2), secondary (3) and intermediate (4) shafts to stop rotating, then to move the motion transmission element (5) axially in the direction of the secondary shaft (3) to the neutral position, then to exert an axial force on the motion transmission element (5) in the same direction, while manually operating the pivoting means (6) making it possible to make at least one of the primary (2), secondary (3) and intermediate (4) shafts pivot around its respective rotation axis, until the motion transmission element (5) and the intermediate shaft (4) are coupled.

15. Method for changing the transmission ratio of a gearbox device (1) for an agricultural machine according to claim 14, **characterized in that** changing the transmission ratio of the gearbox device (1) to a second ratio consists first in waiting for the primary (2), secondary (3) and intermediate (4) shafts to stop rotating, then to move the motion transmission element (5) axially in the direction opposite to the secondary shaft (3) to the neutral position, then to exert an axial force on the motion transmission element (5) in the direction opposite to the secondary shaft (3) while manually operating the pivoting means (6) making it possible to make at least one of the primary (2), secondary (3) and intermediate (4) shafts pivot around its respective rotation axis, until the coupling is achieved.
